# EUROPÄISCHE PATENTSCHRIFT

(11) **EP 2 839 952 B1**
(45) Veröffentlichungstag und Bekanntmachung des Hinweises auf die Patenterteilung: **19.10.2022**
(21) Anmeldenummer: 14002928.1
(22) Anmeldetag: 22.08.2014
(51) Int. Cl.: B32B 5/02, B32B 11/10, B32B 13/14, B32B 27/12

(54) **Verbessertes Verbundsystem**
Improved composite system
Système composite amélioré

(30) Priorität: 23.08.2013 DE 202013007489 U
(43) Veröffentlichungstag der Anmeldung: 25.02.2015
(73) Patentinhaber: Triflex GmbH & Co. KG, 32423 Minden (DE)
(72) Erfinder: Schneider, Günter, 31600 Uchte (DE); Kaschuba, Hermann, 31712 Niedernwöhren (DE)
(74) Vertreter: König Szynka Tilmann von Renesse Patentanwälte Partnerschaft mbB Düsseldorf

(56) Entgegenhaltungen:
- EP-A1- 0 637 658
- EP-A2- 0 106 986
- WO-A1-99/04098
- WO-A1-2011/022849
- DE-A1- 1 805 227
- DE-A1- 2 909 179
- DE-A1- 4 322 462

## Beschreibung

Die vorliegende Erfindung betrifft ein Verbundsystem umfassend einen Untergrund (insbesondere einen mineralischen Untergrund) und eine Schicht, die mindestens ein Polymer und ein Gewebe umfasst (Armierungsschicht). Das erfindungsgemäße Verbundsystem weist eine erhöhte Rissüberbrückungsfähigkeit auf und ist daher insbesondere als Fahrbahnoberfläche geeignet.

Hochbeständige und reißfeste Beschichtungen sind insbesondere bei Anwendungsbereichen erforderlich, bei denen die Untergründe starken Belastungen ausgesetzt sind. In diesen Anwendungsbereichen sind zudem entsprechende Regelwerke, wie bspw. die Bau- und Prüfgrundsätze (BPG) des Deutschen Instituts für Bautechnik zu beachten. Für die Beschichtung der stark beanspruchten Untergründe werden üblicherweise zähelastische Massen verwendet. Diese zähelastischen Massen können bis zu einem bestimmten Maß die durch die Spannungen auftretenden Risse in dem Untergrund überbrücken, werden die Spannungen jedoch zu groß, reißen auch die zähelastischen Massen auf und eine Abdichtung des Untergrunds gegenüber Feuchtigkeit oder aggressiven Medien ist nicht mehr gewährleistet.

Zur Erhöhung der Rissüberbrückungsfähigkeit kann die Beschichtung des Verbundsystems mit einer Armierung versehen werden.

Beschichtungssysteme mit Gewebeeinschlüssen für Oberflächen sind bereits umfänglich bekannt. So offenbart zum Beispiel die EP 0 106 986 A2 die Armierung von Mörtel mit mineralischen Bindemitteln oder Beschichtungsstoffe mit organischen Bindemitteln mit textilier Armierung. Beschichtungssysteme auf Polyacrylatharzbasis und Gewebe für retroreflektive Fahrbanmarkierungen kennt der Fachmann aus der WO 99/04098 A1. Die DE 1 805 225 A1 offenbart die Verkleidung von Fassaden mit kunststoffegetränkten Gewebe oder Filz aus Glasfasern. Aus der EP 0 637 658 A1 ist die Verstärkung und Verlängerung der Haltbarkeit von Wandsystemen mit Gittergeweben und polymerischen Harzen bekannt. Die WO 2011/022849 A1 offenbart eine Bewehrungsmatte für eine armierte Mörtelschicht mit Kohlefasern sowie Polyester- oder Glasfasern aufweist. Die DE 29 09 179 A1 betrifft die Verstärkung von Stahlbetonkonstruktionen durch Beschichtung mit einem glasfaserverstärkten Kunststoff-Laminat. Aus der US 6,192,650 B1 kennt der Fachmann ein Verfahren zur Verstärkung von Fahrbahnoberflächen umfassend das Aufbringen einer Verstärkungslage mit einem Harz und einem Gittergewebe. Die DE43 22 462 lehrt, zur Armierung textile Vliese aus Polypropylen oder Polyester einzusetzen.

Gerade für Oberflächen, die starken Belastungen ausgesetzt sind, sind die bekannten Verbundsysteme jedoch nicht ausreichend gut geeignet. So werden Fahrbahnoberflächen nicht nur erheblichen Druck- und Reibungskräften ausgesetzt, sondern auch Temperaturschwankungen oder Frost können die Oberfläche und die tragenden Untergründe schädigen.

Der Erfindung liegt daher die Aufgabe zugrunde, ein verbessertes Verbundsystem sowie eine verbesserte Beschichtung zur Herstellung eines solchen Verbundsystems bereitzustellen.

Erfindungsgemäß wird die Aufgabe durch ein Verbundsystem gemäß Anspruch 1 gelöst. Spezifische Ausführungsformen der Erfindung sind Gegenstand der zusätzlichen abhängigen oder unabhängigen Ansprüche.

In einem ersten Aspekt stellt die Erfindung ein Verbundsystem bereit umfassend einen mineralischen Untergrund und eine Schicht, die mindestens ein Polymer, das ein Acrylatharz ist, und ein Gewebe umfasst (im Folgenden auch als Armierungsschicht bezeichnet). In einem zweiten Aspekt wird eine Beschichtung mit einem Polymer, das ein Acrylatharz ist, und einem Gewebe zur Verbesserung der Rissüberbrückungsfähigkeit eines Untergrunds, insbesondere eines Bauuntergrunds, bereitgestellt.

### Die Erfindung im Einzelnen

Die Erfinder haben festgestellt, dass das erfindungsgemäße Verbundsystem eine erhöhte Rissüberbrückungsfähigkeit aufweist. In einer besonderen Ausführungsform der Erfindung zeigt sich, dass das Verbundsystem nicht nur über eine erhöhte Rissüberbrückungsfähigkeit verfügt, sondern auch andere Kriterien erfüllt, die für eine Oberflächenbeschichtung wichtig sind. So erfüllt das System vorzugsweise die Spezifikationen, die gemäß der DIN-Norm V 18026 "Oberflächenschutzsysteme für Beton aus Produkten nach DIN EN 1504-2" erforderlich sind. Dazu zählen insbesondere eine oder alle, vorzugsweise alle, der folgenden Eigenschaften:
- Schutz gegen das Eindringen von Stoffen wie CO₂, Wasser oder Wasserdampf
- Physikalische Widerstandsfähigkeit bzgl. Haftzugfestigkeit, Griffigkeit, Abriebfestigkeit und Schlagfestigkeit
- Widerstandsfähigkeit gegen Chemikalien
- Brandverhalten

Das erfindungsgemäße Verbundsystem hat den Vorteil, dass es mit Hilfe der üblichen Beschichtungsmethoden hergestellt werden kann. Es bedarf somit keiner besonderen Verfahrensschritte oder Maschinen.

In einer bevorzugten Ausführungsform der Erfindung besitzt das zur Armierung der polymerhaltigen Schicht verwendete Gewebe eine Schuss-Zugfestigkeit von mindestens 3000 N/5cm, bevorzugt 3500 N/5cm und/oder eine Ketten-Zugfestigkeit von mindestens 2750 N/5cm und bevorzugt von 3000 N/5cm.

Durch die starke Zugfestigkeit des Gewebes bezüglich Schuss und Kette wird die Schicht in dieser Ausführungsform so stabilisiert, dass sie auch bei einer sehr starken Zugbeanspruchung nicht aufreißt.

Durch die hohe Schiebefestigkeit ist auch bei einer punktuellen Beanspruchung der Beschichtung gewährleistet, dass das Gewebe sich in diesem Bereich nicht verzieht sondern seine Formstabilität im Wesentlichen bewahrt.

In einer bevorzugten Ausführungsform des Verbundsystems kann das Gewebe zumindest teilweise in Dreherbindung gewebt sein. In besonders bevorzugtem Maße ist das Gewebe ausschließlich in der Dreherbindung gewebt. Bei einer Dreherbindung überkreuzen sich die Kettfäden, was zu einem Gewebe mit einer stark erhöhten Schiebefestigkeit führt.

In einer weiteren Ausführungsform enthält das Gewebe Glasfasern, vorzugsweise besteht es aus Glasfasern. Glasfasern besitzen in der Regel ein hohes Elastizitätsmodul verbunden mit einer hohen Zugfestigkeit, so dass die aus ihnen hergestellten Gewebe zugfest sind, ohne aber spröde zu sein. Sie können damit auch gerade spröde und rissempfindliche Beschichtungsmassen in ihrer ausgehärten Form in ausreichendem Maße verstärken. Weiterhin sind Glasfasergewebe üblicherweise verarbeitungsfreundlich und nicht brennbar. Durch ihre hohe Korrosionsbeständigkeit sind sie in der Lage, praktisch unbegrenzt lange verstärkend zu wirken.

Die Glasfasern des Gewebes besitzen bevorzugt einen Durchmesser zwischen 5 und 25 µm.

Die Fasern des Gewebes können auch Metall enthalten oder aus Metall bestehen. Die Fasern können auch Mineralien enthalten oder daraus bestehen. Es kann sich bei den Fasern auch um Kohlenstoffasern handeln. In einer weiteren Ausführungsform können es Aramidfasern sein.

In einer Ausführungsform kann das Gewebe aus Fasern unterschiedlicher Materialien bestehen.

Um die Schiebefestigkeit des Gewebes zu erhöhen, kann es in geeigneter Weise mit einer Ausrüstung versehen werden.

Eine Ausrüstung im Sinne der Erfindung ist synonym zu den Begriffen "Textilveredelung" oder "Appretur" und ist als jegliche mechanische oder chemische Nachbehandlung des Gewebes definiert, die dessen Eigenschaften verändert, um die Gebrauchseigenschaften zu verbessern. Die Ausrüstung umfasst Nachbehandlungsverfahren wie bspw. das Aufrauen, die Beschichtung oder das Imprägnieren mit Chemikalien.

Vorzugsweise erfolgt die Ausrüstung des Gewebes durch eine Imprägnierung mit Chemikalien. Als Chemikalien bieten sich hier insbesondere ein Elastomer wie beispielsweise Latex, Styrol-Butadienkautschuk (SBR), Natur-Kautschuk (NR), Polyisopren-Kautschuk (IR), Acrylnitrilbutadienkautschuk (NBR) oder Poly(isobutylen-isopren)-Kautschuk (IIR) an.

Vorteilhafterweise weist das Gewebe eine gemittelte Maschenweite zwischen 1 und 10 mm, bevorzugt zwischen 2 und 8 mm und besonders bevorzugt zwischen 4 und 6 mm auf. Besonders vorteilhaft besitzt das Gewebe eine gemittelte Ketten-Maschenweite von 5 mm und eine gemittelte Schuss-Maschenweite von 6 mm.

Vorteilhaft weist das Gewebe ein Flächengewicht von 300 bis 360 g/m², bevorzugt von 315 bis 355 g/m² und besonders bevorzugt von 325 bis 345 g/m² auf.

Wie oben ausgeführt, umfasst das erfindungsgemäße Verbundsystem einen Untergrund, der mineralisches Material umfasst. In einer Ausführungsform besteht der Untergrund jeweils aus einem solchen Material. In dem erfindungsgemäßen System können darüber hinaus weitere Schichten aus anderem Material oder mit einer anderen Materialzusammensetzung enthalten sein.

In einer Ausführungsform der Erfindung ist der mineralische Untergrund ausgewählt aus der Gruppe bestehend aus Naturstein, Sand, Lehm, keramische Baustoffe, Keramik, Glas, Mörtel, Zement und Beton oder Mischungen davon. In einer bevorzugten Ausführungsform ist der mineralische Untergrund aus Beton.

In einer besonderen Ausführungsform liegt das Verbundsystem als mehrschichtiges System vor, d.h. es weist zusätzlich zur erfindungsgemäßen Armierungsschicht und dem Untergrund noch eine oder mehrere weiterer Schichten auf. Bei einem mehrschichtigen Aufbau kann die erfindungsgemäße Armierung Teil der Grundierungsschicht, Versiegelungs- oder Abdichtungsschicht oder einer beliebigen dazwischen liegenden Beschichtung sein. Es können auch in mehr als einer, d.h. vorzugsweise zwei oder mehr als zwei Schichten erfindungsgemäße Armierungen vorgesehen sein.

Als weitere Schicht des Verbundsystems kann vorzugsweise eine Versiegelungsschicht (im Folgenden auch als "Versiegelung" bezeichnet) vorhanden sein. Diese bildet bevorzugt die oberste Schicht des Verbundsystems.

Vorteilhafterweise kann das Verbundsystem auch mit einer Grundierungsschicht (im Folgenden auch als "Grundierung" bezeichnet) vorliegen. Diese wird bevorzugt direkt auf den mineralischen Untergrund aufgetragen. In einer bevorzugten Ausführungsform liegt die Armierungsschicht auf der Grundierungsschicht auf.

In einer bevorzugten Ausführungsform der Erfindung weist das erfindungsgemäße Verbundsystem den folgenden Schichtenaufbau auf:
(a) mineralischer Untergrund
(b) Grundierungsschicht
(c) Armierungsschicht

In einer besonders bevorzugten Ausführungsform der Erfindung weist das erfindungsgemäße Verbundsystem den folgenden Schichtenaufbau auf:
(a) mineralischer Untergrund
(b) Grundierungsschicht
(c) Armierungsschicht
(d) Versiegelungsschicht

Zusätzlich kann die Armierungsschicht noch mit einem granulären Material wie Quarzsand, Korund oder geschmolzene synthetische Mineralien abgestreut werden, um eine höhere Rutschfestigkeit (Rauigkeit) zu erzielen. Dies erfolgt vorzugsweise in frischem d.h. nicht vollständig ausgehärtetem Zustand. Das Streumaterial ist vorzugsweise nach Erhärtung der Armierungsschicht in diese eingebunden und kann bei Überschichtung und nach dem anschließenden Entfernen des Überschusses mit einer Versiegelungsschicht noch zusätzlich gebunden und ummantelt werden.

In einer speziellen Ausführungsform der Erfindung weist das erfindungsgemäße Verbundsystem den folgenden Schichtenaufbau auf:
(a) mineralischer Untergrund
(b) Grundierungsschicht umfassend PMMA und/oder PMMA-Copolymere
(c) Armierungsschicht umfassend
   - PMMA und/oder PMMA-Copolymere
   - ein Glasgewebe als Armierung
   - Pulver aus Sand oder Silikatderivaten als granuläres Material
(d) Versiegelungsschicht umfassend PMMA und/oder PMMA-Copolymere.

Sofern nicht ausdrücklich anders erwähnt, können die nachfolgenden Ausführungen gleichermaßen für alle in einem Verbundsystem jeweils vorliegenden Schichten gelten. Dem Fachmann ist es geläufig, die genaue Zusammensetzung einer Schicht jeweils auf die besonderen Bedürfnisse eines gegebenen Verbundsystems anzupassen.

Bei dem erfindungsgemäßen Verbundsystem werden die einzelnen Schichten bevorzugt durch Aufbringen und Aushärten einer Beschichtungsmasse (nachfolgend auch Polymerisationsharz-Beschichtungsmasse) hergestellt. Dies gilt gleichermaßen für die Herstellung der Armierungsschicht wie auch für die Herstellung der weiteren Schichten, wie der Grundierungsschicht oder der Versiegelungsschicht, falls nicht ausdrücklich anders ausgeführt.

In der Beschichtungsmasse zur Herstellung der Schichten des Verbundsystems beträgt der Anteil der Bindemittel (vorzugsweise bestehend aus Monomeren und/oder gelösten Polymeren) zur Ausbildung des/der Polymer/e bzw. Copolymere vorzugsweise mindestens 30 Gew.-%, mindestens 50 Gew.-%, mindestens 80 Gew.-% oder mindestens 90 Gew.-% bezogen auf die Beschichtungsmasse. Bevorzugt liegt der Anteil der Bindemittel zwischen 20 und 100 Gew.-%, besonders bevorzugt zwischen 20 und 95 Gew.-% und insbesondere zwischen 20 und 90 Gew.-%. Da die Bindemittel die Polymere bzw. Copolymere in der Beschichtungsmasse bilden, gelten diese Angaben für den Polymer/Copolymeranteil in der ausgehärteten Beschichtungsmasse entsprechend. Sofern nachfolgend nicht ausdrücklich anders erwähnt, umfasst der Begriff "Polymer" jeweils auch den Begriff "Copolymer".

Vorteilhaft ist das Polymer ausgewählt aus der Gruppe der folgenden Verbindungen oder Mischungen daraus: Polymethylmethacrylat (PMMA) und Polyacrylat. Diese Angaben gelten sowohl für die gelösten Polymere in der Beschichtungsmasse als auch für die von den Monomeren gebildeten Polymere in der ausgehärteten Schicht.

Die angestrebten Eigenschaften des erfindungsgemäßen Verbundsystems werden durch die Auswahl geeigneter Bestandteile und geeigneter Mengenverhältnisse der Bestandteile der Zusammensetzung der Beschichtung erreicht. Dabei bildet die Polymerisationsharz-Beschichtungsmasse mindestens ein Acrylatharz und bevorzugt ein Polymethylmethacrylatharz (PMMA-Harz) aus. Dabei handelt es sich vorzugsweise um ein vorbeschleunigtes und/oder intern flexibilisiertes Polymethylmethacrylatharz. "Vorbeschleunigt" bedeutet im Rahmen der Erfindung, dass dem Bindemittel bereits ein Beschleuniger für die Härtung beigefügt ist und daher nicht mehr separat hinzugegeben werden muss. Beispiele für Beschleuniger sind dem Fachmann bekannt, so z. B. Aminbeschleuniger. Die Verwendung von reaktiven Rohstoffen zur Flexibilisierung des Bindemittels ist dem Fachmann ebenso geläufig.

Die Menge an Polymethylmethacrylatharz in der Beschichtung unterliegt grundsätzlich keiner Beschränkung. Es hat sich allerdings als geeignet herausgestellt, wenn der Anteil des Polymethylmethacrylatharz an der Gesamt-Beschichtung bis zu 100 Gew.-%, besonders bevorzugt zwischen 20 oder 25 und 95 Gew.-%, und ganz besonders bevorzugt zwischen 30 und 90 Gew.-% beträgt.

Die Polymerisationsharz-Beschichtungsmasse kann neben dem Acrylat und/oder Methylmethacrylat (MMA), vorzugsweise in den oben genannten Anteilen, ein oder mehrere zur Copolymerisation fähige Monomere, bevorzugt weitere Monomere aus der Klasse der Acrylate, in Anteilen von 15 bis 20 Gew.-% wie beispielsweise 2-Ethylhexylacrylat und ein vernetzendes Monomer wie beispielsweise Polyethyleneglycol Dimethacrylate in Anteilen von 1 bis 5 Gew.-%, jeweils bezogen auf die Gesamtbeschichtungsmasse, enthalten.

Die in der Polymerisationsharz-Beschichtungsmasse enthaltenen Monomere, die ggf. zusätzlich zu MMA und/oder Acrylat vorhanden sein können, sind vorzugsweise ausgewählt aus der Gruppe bestehend aus: 2-Ethylhexylacrylat, Tetraethylenglycoldimethacrylat, 2-Methoxy-1-Methylethylacetat, Butylacrylat.

Neben dem Polymer kann die Polymerisationsharz-Beschichtungsmasse noch weitere Bestandteile umfassen, wie z. B. Füllstoffe wie Carbonate, beispielsweise Calciumcarbonat, Quarzmehle, Siliciumdioxid Bariumsulfat, Aluminiumhydroxid, Kreide, Talkum oder Calciumsulfat. Die Menge des Füllstoffs liegt bei bis zu 80 Gew.-%, bevorzugt zwischen 0 und 80 Gew.-% und besonders bevorzugt zwischen 0 und 70 Gew.-% jeweils bezogen auf die Gesamt-Beschichtungsmasse. Eine Beschichtungsmasse für eine Grundierung enthält vorzugsweise keine Füllstoffe. Die Beschichtungsmasse zur Ausbildung einer Armierungsschicht enthält vorzugsweise Füllstoffe, insbesondere mit einem Anteil bis zu 70%.

Des Weiteren kann die erfindungsgemäße Beschichtungsmasse als zusätzlichen Bestandteil mindestens ein Pigment enthalten. Das Pigment ist dabei bevorzugt ausgewählt aus der Gruppe bestehend aus organischen Buntpigmenten und anorganischen Buntpigmenten. Das anorganische Buntpigment kann ausgewählt sein aus der Gruppe bestehend aus Titandioxid, Eisenoxidrotpigment, Eisenoxidschwarzpigment, Eisenoxidgelbpigment, Bismutvanadatpigment, Molybdatrotpigment, Molybdatorangepigment, Silikatpigment, komplexen anorganischen Buntpigmenten oder einer Kombination davon. Insbesondere bevorzugt sind Eisenoxide und Chromoxide.

Falls in der Zusammensetzung der Beschichtungsmasse ein organisches Buntpigment verwendet wird, so handelt es sich dabei vorzugsweise um ein Azo- oder Diazopigment oder Phthalocyaninpigmente.

Die Menge der verwendeten Pigmente unterliegt keiner besonderen Einschränkung. Sie kann bis zu 10 Gew.-%, bevorzugt zwischen 2 oder 3 und 9 Gew.-%, oder zwischen 3,5 und 8 Gew.-%, insbesondere bevorzugt zwischen 4 und 7,5 Gew.-%, jeweils bezogen auf die Beschichtungsmasse, betragen.

In der Beschichtungsmasse kann des Weiteren ein Thixotropiermittel verwendet werden. Das Thixotropiermittel ist dabei bevorzugt ausgewählt aus der Gruppe enthaltend Siliciumdioxid oder Bentonite sowie Derivate davon. Hinsichtlich der Verwendung von Siliciumdioxid in der Zusammensetzung der Beschichtungsmasse hat sich amorphes Siliciumdioxid als bevorzugt herausgestellt, da die rheologischen Materialeigenschaften positiv beeinflusst werden und es eine gute Verträglichkeit hinsichtlich der Stabilität aufweist.

Falls Siliciumdioxid verwendet wird, kann dessen Gehalt bis zu 2,5 Gew.-%, bevorzugt zwischen 0,1 oder 0,3 und 2 Gew.-%, insbesondere zwischen 0,4 und 1,5 Gew.-% oder zwischen 0,5 und 1 Gew.-%, jeweils bezogen auf die Gesamt-Beschichtungsmasse betragen.

Es kann auch von Vorteil sein, der Beschichtungsmasse als weiteren Bestandteil mindestens einen Inhibitor zur Reaktionsverzögerung beizufügen, um zu vermeiden, dass die Beschichtungsmasse zu schnell ausreagiert. Damit wird die "Topfzeit" (Verarbeitungszeit) und Aushärtungszeit gesteuert. Bei dem Inhibitor kann es sich beispielsweise um eine 8 bis 12 Gew.-%ige, vorzugsweise 10 Gew.-%ige Lösung eines 2-6-di-tert-butyl-p-Cresols handeln. Diese Inhibitorlösung kann in Mengenanteilen von bis zu 1,5 Gew.-% der Beschichtungsmasse zugesetzt werden. Aus Gründen der Dosierbarkeit des Inhibitors ist es vorteilhaft, eine Lösung zu verwenden. Eine direkte Zugabe des Inhibitors ist aber auch möglich.

Darüber hinaus kann die Beschichtungsmasse weitere, für Beschichtungsmassen übliche, Additive enthalten, wie beispielsweise Farbmittel zur Nuancierung sowie Hilfsmittel aus der Gruppe der Tenside, nichtpigmentäre und pigmentäre Dispergiermittel, Füllstoffe, Stellmittel, weitere Harze, Wachse, Entschäumer, Netzmittel, UV-Absorber, Lichtstabilisatoren oder eine Kombination davon.

Die Zusammensetzung der Beschichtungsmasse wird im Allgemeinen unter Verwendung eines Initiators gehärtet. Als bevorzugter Initiator zur Härtung des Polymethylmethacrylatharzes hat sich ein Initiator herausgestellt, welcher ausgewählt ist aus der Gruppe, bestehend aus Initiatoren auf Peroxidbasis, vorzugsweise ein organisches Peroxid, insbesondere bevorzugt Benzoylperoxid. Insbesondere kommt Dibenzoylperoxid als Initiator in Frage. Der Anteil des Initiators an der Beschichtungsmasse beträgt vorteilhafterweise bis zu 6 Gew.-% und bevorzugt zwischen 1 und 6 Gew.-%.

Die Beschichtungsmasse kann beispielsweise die folgenden Inhaltsstoffe umfassen:

| | |
|---|---|
| 30,0 - 100,0 Gew.-% | Bindemittel (Monomere zur Ausbildung eines Polymers und/oder gelöstes Polymer) |
| 0,0 - 10,0 Gew.-% | anorganische und/oder organische Buntpigmente |
| 0,0 - 70,0 Gew.-% | Füllstoffe |
| 0,0 - 15,0 Gew.-% | weitere Hilfs- und Zusatzstoffe |

Vorzugsweise besteht die Zusammensetzung aus diesen genannten Inhaltsstoffen.

Die Verwendung von ausgewählten Polymeren für die Beschichtungsmasse erlaubt eine zielgerichtete Anpassung an die jeweiligen Erfordernisse der Beschichtung, z.B. in Bezug auf Farbe, Struktur, Strapazierfähigkeit, Elastizität, Schall- oder Wärmedämmung, Lichtechtheit, Frost- und Hitzeresistenz, Feuerbeständigkeit, Resistenz gegenüber Chemikalien oder Wasser.

Die erfindungsmäße Armierungsschicht kann eine Schichtdicke von 1,5 bis 6 mm, bevorzugt von 2,5 bis 5 mm und besonders bevorzugt von 4 bis 4,5 mm besitzen.

Eine zusätzlich verwirklichte Grundierungsschicht kann eine Schichtdicke von 0,05 bis 0,7 mm, bevorzugt von 0,1 bis 0,6 mm und besonders bevorzugt von 0,2 bis 0,35 mm besitzen.

Eine zusätzlich vorhandene Versiegelungsschicht kann eine Schichtdicke von 0,2 bis 1,0 mm, bevorzugt von 0,3 bis 0,8 mm und besonders bevorzugt von 0,4 bis 0,7 mm besitzen.

In einer bevorzugten Ausführungsform weist das Verbundsystem die folgenden Schichtdicken auf:

| | |
|---|---|
| (a) Grundierungsschicht | 0,2 bis 0,35 mm |
| (b) Armierungsschicht | 4,0 bis 4,5 mm |
| (c) Versiegelungsschicht | 0,4 bis 0,7 mm |

Die Beschichtung kann mit den für den Fachmann geläufigen Verfahren hergestellt werden, also z.B. durch Streichen, Rollen, Spachteln oder Spritzen.

Zweckmäßig wird die erfindungsgemäße Beschichtung mit einer Versiegelung versehen. Durch eine Versiegelung kann die Beschichtung an den jeweiligen Verwendungszweck angepasst werden bzw. einen weiteren Schutz erlangen.

Zweckmäßig enthält die Versiegelung als weiteren Bestandteil mindestens einen UV-Stabilisator.

In einer Ausführungsform der Erfindung weist die Armierungsschicht oder die Versiegelungsschicht eine Abstreuung mit einem granulären Material auf.

In vorteilhafter Weise ist dieses granuläre Abstreumaterial ausgewählt aus der Gruppe umfassend Sand, insbesondere Quarzsand, Split, Calciumoxid, Aluminiumoxid, Bauxit, Glasbruch, Glasperlen, Acrylglaspartikel, Korund und hier insbesondere geschmolzenes synthetisches Mineral.

Bevorzugt wird als granuläres Material ein geschmolzenes synthetisches Mineral verwendet, das die folgende Zusammensetzung aufweist:
- 45% CaO
- 8% Al₂O₃
- 36% SiO₂
- 11% MgO

In einem weiteren Aspekt stellt die vorliegende Erfindung ein Verbundsystem zur Verwendung für Fahrbahnoberflächen und insbesondere für Parkdecks bereit.

Das erfindungsgemäße Verbundsystem kann zweckmäßig wie folgt hergestellt werden.
(a) Aufbringen einer Grundierung umfassend eine Polymermasse auf einen mineralischen Untergrund;
(b) Aufbringen des Armierungsgewebes;
(c) Tränken des Armierungsgewebes mit einer Beschichtungsmasse umfassend mindestens eine Polymermasse und Aushärten der Beschichtungsmasse;
(d) optional eine Abstreuung der Beschichtung mit einem granulären Material, die dann vor dem finalem Aushärten der Beschichtungsmasse aufgebracht wird;
(e) Aufbringen einer Versiegelungsmasse und Aushärten der Versiegelungsmasse.

Die erfindungsgemäße Beschichtungsmasse und das erfindungsgemäße Gewebe können außerdem als Beschichtungssystems verwendet werden, das für die Beschichtung eines mineralischen Untergrunds geeignet ist. In einem weiteren Aspekt betrifft die Erfindung demnach ein Beschichtungssystem, das durch mindestens eine Beschichtungsmasse wie hier beschrieben und ein Gewebe wie hier beschrieben charakterisiert ist.

### Definitionen

Im Sinne der Erfindung ist ein "mineralischer Untergrund" als ein Untergrund definiert, der überwiegend aus einem mineralischen Baustoff oder Mischungen verschiedener mineralischer Baustoffe besteht. Beispiele für mineralische Baustoffe sind Naturstein, keramische Baustoffe, Glas, Mörtel, Zement oder Beton. Gemäß der vorliegenden Definition sind auch Verbundwerkstoffe als mineralische Baustoffe anzusehen, wenn sie neben dem hauptsächlich vorhandenen mineralischen Bestandteil einen oder mehrere nichtmineralische Bestandteile aufweisen, wie bspw. bei Faserzement.

Gemäß der Erfindung ist unter einem "Verbundsystem" ein System aus mindestens zwei Schichten zu verstehen, wobei diese Schichten unmittelbar oder mittelbar dauerhaft miteinander verbunden sind, d.h. zwischen diesen Schichten können ggf. auch weitere Schichten liegen.

Ein Gewebe im Sinne der Erfindung kennzeichnet ein Produkt, welches mittels fadenförmiger Erzeugnisse durch einen Webvorgang hergestellt wird. Bei einem Gewebe sind die Fäden vorzugsweise als gitterbildende Struktur rechtwinklig angeordnet, so dass sie ein rechteckiges oder quadratisch aufgebautes Gittergewebe bilden können. Die Fäden können aber z.B. auch schräg zueinander verlaufen und so ein rautenförmiges Gitter bilden. Als fadenförmige Ausgangsstoffe können z.B. Folienbändchen, Garne, Zwirne oder Fasern verwendet werden.

Unter einer "Armierungsschicht" wird eine Schicht verstanden, die das zur Armierung verwendete Gewebe zumindest partiell umfasst. Bevorzugt ist das Armierungsgewebe vollständig von der Armierungsschicht umschlossen. Es kann aber auch auf die Armierungsschicht so aufgebracht sein, dass es als offenes Gewebe mit einer benachbarten Schicht eine Bindung eingehen kann. So kann das Gewebe Bestandteil einer Grundierungsschicht sein und als offenes Gewebe zur Armierung der darüber geschichteten Armierungsschicht dienen. Eine andere Möglichkeit sieht eine Armierung der Armierungsschicht mit dem Gewebe vor, die z.B. aufgrund einer nur partiellen Imprägnierung mit der Beschichtungsmasse der Armierungsschicht ein offenes Gewebe ergibt, das nach Auftragen einer weiteren Schicht, wie bspw. eine Versiegelung auch zur Armierung dieser Schicht beiträgt.

Gemäß der Erfindung wird unter der "Zugfestigkeit" derjenige Spannungswert verstanden, bei dem eine fadenförmige Probe unter einer Zugbeanspruchung zerreißt. Dieser Begriff ist synonym zu den Begriffen "Bruchlast", "Höchstzugkraft" und "Reißfestigkeit". Die Zugfestigkeit wird üblicherweise mit der Einheit N/5cm angegeben. Methoden zur Bestimmung der Zugfestigkeit sind dem Fachmann bekannt und beinhalten das Einspannen einer Prüfprobe in eine Prüfapparatur und anschließender Dehnung der Probe mit stetig steigender Kraft bis zum Zerreißen. Die sich beim Zerreißen ergebende, gemessene Kraft entspricht der Zugfestigkeit der Probe.

Im Rahmen der Erfindung entspricht die "Schiebefestigkeit" derjenigen Kraft, die aufgewendet werden muss, um bei einem Gewebe einen Faden senkrecht zu seiner Längsachse innerhalb der Gewebeebene zu verschieben. In geeigneter Weise wird die Schiebefestigkeit durch ein Prüfverfahren nach DIN EN ISO 13936 bestimmt.

Eine Dreherbindung im Sinne der Erfindung liegt vor, wenn sich im Gegensatz zur gewöhnlichen Gewebebindung, bei der nur das Kettfadensystem mit den Schussfäden verkreuzt wird, zusätzlich die Kettfäden gegeneinander verkreuzen.

### Abbildungslegende

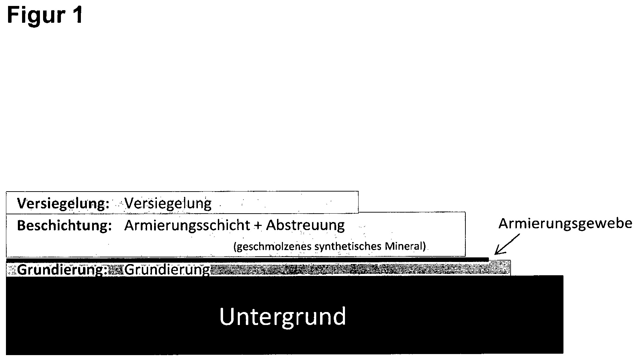

- Fig. 1:: Schematische Darstellung einer Ausführungsform des Oberflächenbeschichtungssystems

### Beispiele

### Beispiel 1: Auftragen des Beschichtungssystems auf einer Betonoberfläche

Es wurde ein Verbundsystem mit dem in der folgenden Tabelle und Abbildung 1 dargestellten Aufbau hergestellt.

| Systemaufbau | Beschreibung |
|---|---|
| Untergrund | Beton |
| Grundierung | Grundierung |
| Armierung | Armierung |
| Beschichtung | Beschichtung |
| Abstreuung | geschmolzenes synthetisches Mineral: 0,6 - 1,5 mm |
| Versiegelung | Versiegelung |

Das Verbundsystem besteht aus den in der folgenden Tabelle aufgeführten Komponenten:

| Stoff | Komponente | Beschreibung |
|---|---|---|
| Grundierung | A | 2-komponentige Grundierung auf Basis von Methylmethacrylatharz |
| Beschichtung R | A | Harzkomponente; 3-komponentige Beschichtung auf Basis von Methylmethacrylatharz |
| Beschichtung S | C | Sandkomponente; 3-komponentige Beschichtung auf Basis von Methylmethacrylatharz |
| Versiegelung | A | 2-Komponentige pigmentierte und UV stabilisierte Versiegelung auf Basis von Methylmethacrylatharz |
| Initiator | B | Initiator auf Benzoylperoxidbasis für Grundierung, Beschichtung und Versiegelung |

Das Verbundsystem wurde mit den folgenden Verfahrensschritten hergestellt:
1. Auftragen der Grundierung mit einer Rolle auf den Untergrund und Aushärtung
2. Auflegen des Armierungsgewebes
3. Auftragen der Beschichtung mit einer Kelle oder einem anderen Werkzeug
4. Einstreuung der Beschichtung mit dem Streugut geschmolzenes synthetisches Mineral per Hand,
5. Abfegen des überschüssigen Streugutes nach der Aushärtung der Beschichtung
6. Auftragen der Versiegelung mit einer Rolle und Aushärtung

### Beispiel 2: Charakterisierung des Verbundsystems

### 1. Ziel der Prüfung

Das gemäß Beispiel 1 hergestellte Verbundsystem wurde im Systemaufbau auf Einhaltung der gemäß DIN V 18026 "Oberflächenschutzsysteme für Beton aus Produkten nach DIN EN 1504-2" erforderlichen Spezifikationen getestet.

### 2. Umfang der Prüfungen

Der Prüfumfang betrifft die erhärteten Stoffe und entspricht der Tabelle 8 der DIN V 18026 sowie der Tabelle 5 derselben Norm für die Prüfungen an den Verbundkörpern. Die Auflistung der Prüfungen sind in der folgenden Tabelle (Prüfungen an den Verbundkörpern) zu finden.

| **Art der Prüfung** - **Verbundkörper** | | **Prüfverfahren** |
|---|---|---|
| | **3.2.1. Schutz gegen das Eindringen von Stoffen** | |
| 3.2.1.1. Bestimmung der CO₂-Durchlässigkeit | | DIN EN 1062-6 |
| 3.2.1.2. Bestimmung der Wasserdampfdurchlässigkeit | | DIN EN 7783 |
| 3.2.1.3. Bestimmung der Wasserdurchlässigkeit | | DIN EN ISO 1062-3 |

| | **3.2.2. Physikalische Widerstandsfähigkeit** | |
|---|---|---|
| 3.2.2.1. Haftzugfestigkeit bei T_{NORM}; Beschichten bei T_{NORM} | | DIN EN 1542 |
| 3.2.2.2. Haftzugfestigkeit bei T_{NORM}; Beschichten bei T_{MIN} | | DIN EN 1542 |
| 3.2.2.3. Haftzugfestigkeit nach Gewitterregenbeanspruchung und Tausalzeinfluss T_{TWB}, Beschichten bei T_{MIN} | | EN 13687-2 |
| | | DIN DIN EN 13687-1 |
| | | DIN EN 1542 |
| 3.2.2.4. Bestimmung der Griffigkeit | | DIN EN 13036-4 |
| 3.2.2.5. Bestimmung der Abriebfestigkeit | | DIN EN ISO 5470-1 |
| 3.2.2.6. Bestimmung der Schlagfestigkeit | | DIN EN ISO 6272-2 |
| 3.2.2.7. Bestimmung der dynamischen Rissüberbrückung | | DIN EN 1062-7 |

| | **3.2.3. Widerstandsfähigkeit gegen Chemikalien** | |
|---|---|---|
| 3.2.3.1. Bestimmung der Chemikalienbeständigkeit | | DIN EN ISO 13529 |
| 3.2.3.2. Bestimmung der Schichtdicke | | DIN EN ISO 2808 |
| 3.2.3.3. Brandverhalten nach Aufbringung | | DIN EN 13501-1 |

### 3. Prüfungen

### 3.1. Herstellung der Verbundkörper

### 3.1.1. Verwendete Grundkörper

Dies umfasste die Prüfung der Haftzugfestigkeit T_{NORM} und T_{MIN}; der Schlagfestigkeit, der Bestimmung der dynamischen Rissüberbrückungseigenschaften und der Schichtdicke. Für diese Prüfungen wurden Betonplatten der Größen 30x30x4 cm verwendet.

Nach erfolgter Untergrundvorbehandlung (Schleifen) wurden die Betonplatten für 7 Tage bei 80 °C im Trockenschrank gelagert.
- Prüfung der Haftzugfestigkeit T_{TWB}:
   Für diese Prüfung wurden als Grundkörper Betonplatten MC (0,40) in der Größe 30x30x6 cm gemäß DIN EN 1766 verwendet. Die mittlere Rautiefe betrug 0,5 mm.
- Bestimmung der Griffigkeit:
   Holzplatten in der Größe 50x20x1 cm wurden für diese Prüfung verwendet.
- Bestimmung der Chemikalienbeständigkeit:
   Verwendet wurden Faserzementplatten in der Größe 50x50x1 cm
- Bestimmung der Abriebbeständigkeit:
   Als Trägerplatten wurden Taber Stahlplatten "specimen plates CAT. No S-16" mit Abmessungen 10×10×0,1 cm verwendet.
- Bestimmung der Wasseraufnahme:
   Kalksandsteine in DF-Format (240x25x11,5 mm) mit einer Wasserdurchlässigkeitsrate w > 5 kg/(m².√h) und einer Rohdichte von 2000 kg/m³ wurden verwendet.
- Prüfung der Kohlenstoffdioxid- und Wasserdampfdiffusion:
   Für diese Prüfungen wurden freie Filme hergestellt.

### 3.1.2. Aufbringung des Oberflächenschutzsystems

Die Grundkörper wurden im Normalklima DIN 50014-23/50-2 oder bei 0°C / 85% RH für die Proben T_{MIN} und T_{TWB} beschichtet. Die Auftragsmengen sind in der folgenden Tabelle angegeben.

| Schicht | 1 | | 2 | 3 |
|---|---|---|---|---|
| Aufbau | **Grundierung** | **Armierung** | **Beschichtung** + Abstreuung **geschmolzenes synthetisches Mineral 0,6 - 1,5 mm** | **Versiegelung** |
| mind. Verbrauch [g/m²] | **350** | | **4 500** | **600** |
| Applikationsgerät | Rolle | | Kelle | Rolle |
| Wartezeit [min] | | | 45 | 45 |

Bemerkung: für die Bestimmung der Chemikalienbeständigkeit wurden die Proben ohne geschmolzenes synthetisches Mineral Abstreuung hergestellt, auf Grund der erforderlichen Härtemessungen (Shore-Härte-Bestimmung).

### 3.2. Prüfungen der Verbundkörper

### 3.2.1. Schutz gegen das Eindringen von Stoffen

### 3.2.1.1. Bestimmung der CO₂-Durchlässigkeit

Die Bestimmung der Kohlenstoffdioxiddurchlässigkeit erfolgte gemäß DIN EN 1062-6 "Beschichtungsstoffe und Beschichtungssysteme für mineralische Untergründe und Beton im Außenbereich - Teil 6: Bestimmung der Kohlenstoffdioxid-Diffusionsstromdichte (Permeabilität)" an freien Filmen.

Dafür wurde die Grundierung mit der Beschichtung ohne Abstreuung und ohne die Versiegelung geprüft.

Die Durchführung dieser Prüfung wurde vom Kiwa MPA Bautest GmbH, Niederlassung Berlin, an drei Probenkörper durchgeführt.

Anforderungen: diffusionsäquivalente Luftschichtdicke S_{D} (CO₂) > 50 m.

Wie die Ergebnisse zeigten, erfüllt das Beschichtungssystem die Anforderungen bezüglich der CO₂-Durchlässigkeit.

### 3.1.2. Bestimmung der Wasserdampfdurchlässigkeit

Die Bestimmung der Wasserdampfdurchlässigkeit erfolgte mit dem Trockenschale Verfahren gemäß DIN EN ISO 7783 "Beschichtungsstoffe - Bestimmung der Wasserdampfdurchlässigkeit - Schalenverfahren" an freien Filmen. Die Prüflinge wurden 28 Tage im Normalklima nach 50014-23/50-2 gelagert. Anschließend wurden die so vorbereiteten Proben drei Zyklen gemäß DIN EN 1062-11 der nachfolgenden Bedingungen unterzogen:
- 24 h in frischem Leitungswasser bei (23 ± 2) °C
- 24 h bei (50 ± 2) °C

Im Anschluss daran erfolgte eine dreitägige Lagerung der Probekörper im Normalklima nach DIN 50014-23/50-2 vor der Prüfung, die anschließend der Bestimmung der Wasserdampfdurchlässigkeit im Trockenschale Verfahren unterzogen wurde. Anforderungen: Klasse II: 5 m ≤ S_{D} ≤ 50 m.

Wie die Ergebnisse zeigten, erfüllt das Beschichtungssystem die Anforderungen bezüglich der Wasserdampfdurchlässigkeit.

### 3.2.1.3. Bestimmung der Wasserdurchlässigkeit

Die Bestimmung der kapillaren Wasseraufnahme des Oberflächenschutzsystems erfolgte gemäß DIN EN 1062-3 "Beschichtungsstoffe - Beschichtungsstoffe und Beschichtungssysteme für mineralische Substrate und Beton im Außenbereich - Teil 3: Bestimmung der Wasserdurchlässigkeit".

Die Prüfung wurde an drei beschichteten Kalksandsteinen durchgeführt. Nach 7-tägiger Aushärtungszeit bei Lagerung unter Normalklima wurden die beschichteten Kalksandsteine mittels einer wasserundurchlässigen Epoxidharzbeschichtung im zweimaligen Auftrag wasserdicht verschlossen. Die Proben wurden vor dem Konditionieren weitere 28 Tage im Normalklima nach DIN 50014-23/50-2 gelagert.

Anschließend wurden die so vorbereiteten Proben 3 Zyklen gemäß DIN EN 1062-11 der nachfolgenden Bedingungen unterzogen:
- 24 h in frischem Leitungswasser bei (23 ± 2) °C
- 24 h bei (50 ± 2) °C

Vor der Prüfung wurden die Probekörper 3 Tage bei Normalklima DIN 50014-12/50-2 gelagert. Bei der Prüfung wurden die Seiten der Probenkörper mit dem Oberflächenschutzsystem ca. 1 cm ins Wasser bei (23 ± 2) °C eingetaucht.

Anforderungen: Wasserdurchlässigkeitsrate w < 0,1 kg/(m².√h).

Wie die Ergebnisse zeigten, erfüllt das Beschichtungssystem die Anforderungen bezüglich der Wasserdurchlässigkeit.

### 3.2.2. Physikalische Widerstandsfähigkeit

### 3.2.2.1. Haftzugfestigkeit bei T_{NORM}; Beschichten bei T_{NORM}

Die Prüfung der Haftzugfestigkeit wurde nach DIN EN 1542 "Produkte und Systeme für den Schutz und die Instandsetzung von Betontragwerken - Prüfverfahren - Messung der Haftfestigkeit im Abreißversuch" mit einem Prüfgerät "Easy-M" der Firma Freundl durchgeführt. Die Stempel wurden 7 Tage nach dem Beschichten mit einem RT-härtenden 2K Epoxidklebstoff verklebt und mind. drei Tage bei RT ausgehärtet. Die Haftfestigkeitsmessung wurde mit einem Lastanstieg von 100 N/s durchgeführt. Anforderungen: Mittelwert von 1,5 N/mm² mit einem kleinsten zulässigen Einzelwert von 1,0 N/mm².

Wie die Ergebnisse zeigten, erfüllt das Beschichtungssystem die Anforderungen bezüglich der Haftzugfestigkeit.

### 3.2.2.2. Haftzugfestigkeit bei T_{NORM}; Beschichten bei T_{MIN}

Das Auftragen des Oberflächenschutzsystems erfolgte bei T_{MIN}, 0 °C / 85 % RH in horizontaler Lage. Die Stoffe und die Betonplatten wurden einen Tag bei T_{MIN} gelagert, bis zum Erreichen der Temperaturkonstanz von T_{MIN}. Die Proben wurden weitere zwei Tage bei T_{MIN} konditioniert und anschließend eine Woche im Normalklima DIN 50014-23/50-2 konditioniert bis zur Prüfung der Haftzugfestigkeit.

Die Prüfung der Haftzugfestigkeit wurde wie in 3.2.1 durchgeführt.

Anforderungen: Mittelwert von 1,5 N/mm² mit einem kleinsten zulässigen Einzelwert von 1,0 N/mm².

Wie die Ergebnisse zeigten, erfüllt das Beschichtungssystem die Anforderungen bezüglich der Haftzugfestigkeit.

### 3.2.2.3. Haftzugfestigkeit nach Gewitterregenbeanspruchung und Tausalzeinfluss T_{TWB}, Beschichten bei T_{MIN}

Das Auftragen des Systems erfolgte bei T_{MIN} wie in 3.2.2.1. beschrieben. Am Ende der einwöchigen Lagerung der Proben bei RT wurden die Proben der Gewitterregenbeanspruchung gemäß DIN EN 13687-2 "Produkte und Systeme für den Schutz und die Instandsetzung von Betontragwerken - Prüfverfahren - Bestimmung der Temperaturwechselverträglichkeit - Teil 2: Gewitterregen-Beanspruchung (Temperaturschock)" unterzogen. Anschließend erfolgte die Frost-Tau-Wechselbeanspruchung gemäß DIN EN 13687-1 "Produkte und Systeme für den Schutz und die Instandsetzung von Betontragwerken - Prüfverfahren - Bestimmung der Temperaturwechselverträglichkeit - Teil 1: Frost-Tau-Wechselbeanspruchung mit Tausalzangriff".

Während Unterbrechungen der Prüfzyklen wurden die Proben im Wasser bei (21 ± 2) °C gelagert. Nach jeweils 10 Zyklen wurden die Prüfkörper visuell auf Rissbildungen und anderen Oberflächenveränderungen geprüft. Nach Abschluss der gesamten 50 Prüfzyklen wurde nach einem Tag Lagerung der Proben bei Normalklima eine visuelle Endprüfung durchgeführt.

Nach 7 Tage Lagerung im Normalklima nach DIN 50014-23/50-2 wurde die Prüfung der Haftzugfestigkeit wie in 3.2.1 beschrieben durchgeführt.

Anforderungen: Mittelwert von 1,5 N/mm² mit einem kleinsten zulässigen Einzelwert von 1,0 N/mm².

Wie die Ergebnisse zeigten, erfüllt das Beschichtungssystem die Anforderungen bezüglich der Haftzugfestigkeit.

### 3.2.2.4. Bestimmung der Griffigkeit

Die hergestellten Probekörper wurden 7 Tage im Normalklima nach DIN 50014-23/50-2 gelagert. Die Messung erfolgte mit einem SRT-Gerät ('skid-resistance' tester) und einem CEN-Gummi gemäß DIN EN 13036-4 "Oberflächeneigenschaften von Straßen und Flugplätzen - Prüfverfahren - Teil 4: Verfahren zur Messung der Griffigkeit von Oberflächen - Der Pendeltest". Vor jeder Einzelmessung wurde die Prüffläche mit Leitungswasser gewässert. Aus zehn Einzelwerten wurde ein Mittelwert bestimmt.

Anforderungen: Klasse III: Skalenteil > 55.

Wie die Ergebnisse zeigten, erfüllt das Beschichtungssystem die Anforderungen bezüglich der Griffigkeit.

### 3.2.2.5. Bestimmung der Abriebfestigkeit

Die Bestimmung der Abriebfestigkeit erfolgte gemäß DIN EN ISO 5470-1 "Mit Kautschuk oder Kunststoff beschichtete Textilien - Bestimmung des Abriebwiderstandes - Teil 1: Taber-Abriebprüfgerät".

Anforderungen: Massenverlust < 3000 mg.

Die Prüfparameter sind der folgenden Tabelle zu entnehmen.

| | |
|---|---|
| Prüfgerät | Taber Abraser nach ASTM D 4060 |
| Reibrad | H22 gemäß DIN V 18026 |
| Last | m = 1000 g |
| Zyklen | n = 1000 |
| Frequenz | f = 1 Hz |

Der Massenverlust jeder Probe wurde alle 500 Umläufe bestimmt. Nach Entfernen mittels Pinsel und Druckluft von restlichem Staub wurde die Abriebmenge mit einer Genauigkeit von 1 mg bestimmt. Die Reibräder wurden ebenfalls alle 100 Umdrehungen durch Druckluft gereinigt.

Wie die Ergebnisse zeigten, erfüllt das Beschichtungssystem die Anforderungen bezüglich der Abriebfestigkeit.

### 3.2.2.6. Bestimmung der Schlagfestigkeit

Die Prüfung der Schlagfestigkeit erfolgte gemäß DIN EN ISO 6272-2 "Beschichtungsstoffe - Bestimmung der Widerstandsfähigkeit bei schlagartiger Verformung (Schlagfestigkeit) - Teil 2: Prüfung durch fallendes Gewichtstück, kleine Prüffläche" auf den Prüfkörper von 3.2.2.1. nach Prüfen der Haftzugfestigkeit an unbeschädigten Stellen.

Anforderungen: Klasse I: ≥ 4 Nm.

Die Begutachtung der Aufschlagstelle erfolgte visuell und mittels Mikroskop und die Beurteilung der Oberflächen nach dem Schlagversuch erfolgte gemäß DIN EN ISO 4628 ff wie in 3.2.3.1 beschrieben.

Wie die Ergebnisse zeigten, erfüllt das Beschichtungssystem die Anforderungen bezüglich der Schlagfestigkeit.

### 3.2.2.7. Bestimmung der dynamischen Rissüberbrückung

Die Prüfung der dynamischen Rissüberbrückung erfolgte gemäß DIN EN 1062-7 "Beschichtungsstoffe - Beschichtungsstoffe und Beschichtungssysteme für mineralische Substrate und Beton im Außenbereich - Teil 7: Bestimmung der rissüberbrückenden Eigenschaften"

Nach dem Beschichten und der Aushärtung einer Betonplatte wurden Probekörper mit Abmessungen (160 × 40 × 40) mm nassgesägt. Die Probekörper wurden anschließend für die Dauer von 7 Tagen einer künstlichen Alterung bei 70 °C im Trockenschrank unterworfen. Nach Konditionierung einem Tag im Normalklima nach DIN 50014-23/50-2 wurde ein Riss in der Probe initiiert. Die Probe wurde anschließend mindestens 2 Stunden bei der Prüftemperatur bei -20 °C gelagert bevor die Prüfung begonnen wurde.

Die Prüfung der dynamischen Rissüberbrückung erfolge mit einer Zwick / Roell Z010 Prüfmaschine in Anlehnung an das Verfahren B 3.2 der DIN EN 1062-7. Die Parameter sind in der folgenden Tabelle dargestellt.

| Parameter | | | Prüfbedingungen |
|---|---|---|---|
| | Trapezfunktion (Temperaturbeanspruchung) | | |
| größte Rissbreite | | wₒ | 0,30 mm |
| kleinste Rissbreite | | wᵤ | 0,10 mm |
| Anzahl der Zyklen | | n | 1 000 |
| Frequenz | | f | 0,03 Hz |
| Änderung der Rissbreite | | w | 0,2 mm |

| | Sinusfunktion (Verkehrbeanspruchung) | | |
|---|---|---|---|
| belastungsabhängige Rissbewegung | | w_{L} | ± 0,05 mm |
| Anzahl der Zyklen | | n | 20 000 |
| Frequenz | | f | 1 Hz |

Ergebnisse: nach den 1000 Zyklen wurden die 4 geprüften Proben mit einem Lichtmikroskop untersucht. Es konnten keine Risse im Oberflächenschutzsystem festgestellt werden. Damit sind die Anforderungen bezüglich der dynamischen Rissüberbrückung erfüllt.

### 3.2.3. Widerstandsfähigkeit gegen Chemikalien

### 3.2.3.1. Bestimmung der Chemikalienbeständigkeit

Die Prüfung der Chemikalienbeständigkeit erfolgte gemäß DIN EN 13259 "Produkte und Systeme für den Schutz und die Instandsetzung von Betontragwerken - Prüfverfahren - Widerstand gegen starken chemischen Angriff" an beschichteten Verbundkörpern ohne Quarzsandabstreuung aufgrund der durchzuführenden Shore-Härte Messung, die eine flache und ebene Oberfläche benötigt. Vor Prüfbeginn wurden die Proben 7 Tage im Normalklima DIN 50014-23/50-2 gelagert. Vor Beaufschlagung der Prüfmedien wurde die Ausgangs-Shore D Härte des Beschichtungssystems bestimmt. Anschließend erfolgte die einseitige Beaufschlagung des Beschichtungssystems mit den Prüfflüssigkeiten ohne Druck. Die Beaufschlagungszeit betrug 7 Tage und wurde bei einer Prüftemperatur von 23 °C durchgeführt.

Die verwendeten Prüfflüssigkeiten sind in der folgenden Tabelle dargestellt: Anforderungen: Klasse I: ≥ 50 % der Ausgangs-Shore-Härte

| | **Gruppe** | **Prüfflüssigkeit (Norm)** | **verwendete Prüfflüssigkeit** |
|---|---|---|---|
| 3 | Heizöl und Dieselkraftstoff und ungebrauchte Motoren- und Getriebeöle | 80,0 % (Volumenanteil) n-Paraffin (C12 bis C 18) + 20,0 % (Volumenanteil) Methylnaphtalin | entsprechend der links dargestellten Norm |
| 10 | Anorganische Säuren bis 20% und säurehaltige hydrolysierende Salze in wässriger Lösung (pH < 6) außer Fluorwasserstoffsäure und oxydierende Säuren und ihre Salze | Schwefelsäure (20 %) | Schwefelsäure (20 %) |
| 11 | Anorganische Basen und ihre alkalischen hydrolysierenden Salze in wässriger Lösung (pH > 8) außer Ammoniumlösungen und oxydierende Salzlösungen (z. B. Hypochlorid) | Natriumhydroxid (20 %) | Natriumhydroxid (20 %) |

Die Beurteilung von eventuellen Schäden des Oberflächenschutzsystems wurde gemäß DIN EN ISO 4628 ff "Beschichtungsstoffe - Beurteilung von Beschichtungsschäden - Bewertung der Menge und der Größe von Schäden und der Intensität von gleichmäßigen Veränderungen im Aussehen" durchgeführt:

| | |
|---|---|
| Teil 1: | "Allgemeine Einführung und Bewertungssystem Bewerten der Intensität von Veränderungen (Glanz, Farbe, Quellung, Schrumpfung)" 0: nicht verändert bis 5: sehr starke Veränderung |
| Teil 2: | "Bewertung des Blasengrades" 0(S0): keine Blasen bis 5(S5): viele Blasen |
| Teil 4: | "Bewertung des Rissgrades" 0(S0): keine Riss bis 5(S5): sehr viele und breite Risse |

Wie die Ergebnisse zeigten, erfüllt das Beschichtungssystem die Anforderungen bezüglich der Chemikalienbeständigkeit.

### 3.2.3.2 Bestimmung der Schichtdicke

Die Bestimmung der Schichtdicke der einzelnen Lagen des Oberflächenschutzsystems erfolgte gemäß DIN EN ISO 2808 "Beschichtungsstoffe - Bestimmung der Schichtdicke", Verfahren 6A - Querschliff/Querschnitt. Die Bestimmung erfolgte auf beschichteten Betonprüfkörper aus 3.2.1. (T_{NORM}), 3.2.2.1. (T_{MIN}), und 3.2.2.2. (T_{WB}). Für die Differenzierung der Beschichtung und der Versiegelung wurden unterschiedliche Farbtöne bei dem Auftragen verwendet. Laut der Tabelle 5.2 der DAfStb Richtlinie "Schutz und Instandsetzung von Betonbauteilen des Deutschen Ausschusses für Stahlbeton" Ausgabe Oktober 2001 inklusive 2. Berichtigung vom Dezember 2005 beträgt die Mindestschichtdicke der hauptsächlich wirksamen Oberflächenschutzschicht (hwO) für OS11b Systeme 4000 µm.

Wie die in der folgenden Tabelle dargestellten Ergebnisse zeigen, erfüllt das Beschichtungssystem die Anforderungen bezüglich Schichtdicke:

| **Lage** | **Stoff** | **Schichtdicke [mm]** | | | **Mittelwert [mm]** |
|---|---|---|---|---|---|
| | | **T_{NORM}** | **T_{MIN}** | **T_{TWB}** | |
| 1 Grundierung | Grundierung | 0,2 | 0,3 | 0,3 | **0,27** |
| 2 Beschichtung | Beschichtung Inkl. Armierungsgewebe | 4,0 | 4,1 | 4,2 | **4,1** |
| 3 Versiegelung | Versiegelung | 0,6 | 0,7 | 0,6 | **0,63** |
| Gesamtaufbau | | 4,8 | 5,1 | 5,1 | **5,0** |

### 3.2.3.3 Brandverhalten nach Aufbringung

Der Brandverhalten des Verbundsystems wurde nach DIN EN 13501-1 " Klassifizierung von Bauprodukten und Bauarten zu ihrem Brandverhalten - Teil 1: Klassifizierung mit den Ergebnissen aus den Prüfungen zum Brandverhalten von Bauprodukten" klassifiziert und vom Prüfinstitut Hoch durchgeführt.

Anforderungen: mind. Klasse E_{fl} - s1

Die Messergebnisse (nicht dargestellt) zeigen, dass das Beschichtungssystem beim Brandverhalten die Anforderungen der Klasse E_{fl} (normal entflammbar) erfüllt.

### Zusammenfassung der Ergebnisse:

Als Ergebnis des umfangreichen Prüfprogramms lässt sich festhalten, dass das Verbundsystem die Anforderungen in allen untersuchten Punkten erfüllt und damit uneingeschränkt für die Verwendung als Beschichtungssystem für Betonoberflächen verwendbar ist.

In der folgenden Tabelle sind die Prüfergebnisse noch einmal zusammengefasst:

| **Prüfung** | **Anforderungen** | **Ergebnis** |
|---|---|---|
| Haftzugfestigkeit bei T_{NORM}; | | |
| Beschichten bei T_{NORM} | | |
| - Mittelwert | ≥ 1,5 [N/mm²] | **erfüllt**√ |
| - kl. Einzelwert | ≥ 1,0 [N/mm²] | **erfüllt** √ |
| Haftzugfestigkeit bei T_{NORM}; | | |
| Beschichten bei T_{MIN} | | |
| - Mittelwert | ≥ 1,5 [N/mm²] | **erfüllt** √ |
| - kl. Einzelwert | ≥ 1,0 [N/mm²] | **erfüllt**√ |
| Haftzugfestigkeit bei T_{NORM} nach Gewitterregenbeanspruchung und Tausalzwechselbeanspruchung; Beschichten bei T_{MIN} | | |
| - Mittelwert | ≥ 1,5 [N/mm²] | **erfüllt** √ |
| - kl. Einzelwert | ≥ 1,0 [N/mm²] | **erfüllt** √ |
| | | |
| Griffigkeit und Rutschfestigkeit | Klasse III, >55 | **Klasse III,** √ |
| Chemikalienbeständigkeit | Klasse I, 7 Tage ohne Druck (Prüfflüssigkeiten der Gruppe 3, 10, 11) | **Klasse** I **für Prüfflüssigkeiten der** √ **Gruppe 3, 10**, **11** |
| Abriebfestigkeit | < 3000 mg nach 1000 U | √ **< 3000 [mg]** √ |
| Kapillare Wasseraufnahme | w < 0,1 kg/(m².√h) | **w < 0,01 [kg/(m².√/h)]** √ |
| Dynamische Rissüberbrückung | B3.2 (-20 °C) | **B3.2 (-20 °C)** √ |
| Schlagfestigkeit | Klasse I, ≥ 4 Nm | **Klasse I, ≥ 4 [Nm]** √ |
| Kohlendioxiddiffusion | S_{D} > 50 m | **erfüllt** √ |
| Wasserdampfdiffusion | Klasse II, 5 m ≤ S_{D} ≤ 50 m | **Klasse II, erfüllt** √ |
| Schichtdicke | hwO > 4 mm | **erfüllt** √ |
| Brandverhalten | mind. E_{fl} | **C_{fl} - s1**, **E_{fl} - s1** √ |

## Patentansprüche

1. Verbundsystem umfassend einen mineralischen Untergrund und eine Schicht, die ein Gewebe und mindestens ein Polymer umfasst (Armierungsschicht), wobei das Gewebe eine Zugfestigkeit für Schuss und Kette von jeweils mindestens 2500 N/5cm aufweist, wobei die Zugfestigkeit derjenigen Kraft entspricht, bei der eine eingespannte fadenförmige Probe bei Dehnung unter stetig steigender Kraft zerreißt, und das Polymer ein Acrylatharz ist und der Anteil des Polymers und/oder des Copolymers an der ausgehärteten Beschichtungsmasse mindestens 30 Gew.-%, mindestens 50 Gew.-%, mindestens 80 Gew.-% oder mindestens 90 Gew.-%, bezogen auf die jeweilige Beschichtungsmasse beträgt.

2. Verbundsystem gemäß Anspruch 1, wobei das Polymer ein Polymethylmethacrylatharz ist.

3. Verbundsystem gemäß Anspruch 1 oder 2, wobei das Gittergewebe eine Schuss-Zugfestigkeit von mindestens 3000 N/5cm, bevorzugt von 3500 N/5cm und/oder eine Ketten-Zugfestigkeit von mindestens 2750 N/5cm, bevorzugt von 3000 N/5cm aufweist.

4. Verbundsystem gemäß Anspruch 1 bis 3, wobei das Gewebe zumindest teilweise in Dreherbindung gewebt ist.

5. Verbundsystem gemäß einem der Ansprüche 1 bis 4, wobei das Gewebe aus Glasfasern, Carbonfasern, Kunststofffasern, Metallfasern, Aramidfasern oder Mineralfasern, oder Mischungen daraus besteht.

6. Verbundsystem gemäß Anspruch 5, wobei die Glasfasern einen Durchmesser zwischen 5 und 25 µm aufweisen.

7. Verbundsystem gemäß einem der vorherigen Ansprüche, wobei das Gewebe mit einer Ausrüstung zur Erhöhung der Schiebefestigkeit versehen ist, wobei die Ausrüstung das Aufrauen, die Beschichtung oder das Imprägnieren mit Chemikalien umfasst.

8. Verbundsystem gemäß Anspruch 7, wobei die Ausrüstung eine Imprägnierung des Gewebes mit einem Elastomer, bevorzugt ausgewählt aus der Gruppe enthaltend Latex, Styrol-Butadienkautschuk, Natur-Kautschuk (NR), Polyisopren-Kautschuk (IR), Acrylnitrilbutadienkautschuk (NBR) und Poly(isobutylen-isopren)-Kautschuk (IIR) umfasst.

9. Verbundsystem gemäß einem der vorherigen Ansprüche, wobei das Gewebe ein Flächengewicht von 300 bis 360 g/m², bevorzugt von 315 bis 355 g/m² und besonders bevorzugt von 325 bis 345 g/m² aufweist.

10. Verbundsystem gemäß einem der vorherigen Ansprüche, wobei es zusätzlich eine Grundierungsschicht umfassend mindestens ein Polymer aufweist.

11. Verbundsystem gemäß einem der vorherigen Ansprüche, wobei es zusätzlich eine Versiegelungsschicht umfassend mindestens ein Polymer aufweist.

12. Verbundsystem gemäß einem der vorherigen Ansprüche, wobei es den folgenden Schichtenaufbau aufweist:
(a) mineralischer Untergrund
(b) Grundierungsschicht
(c) Armierungsschicht

13. Verbundsystem gemäß einem der Ansprüche 1 bis 11, wobei es den folgenden Schichtenaufbau aufweist:
(a) mineralischer Untergrund
(b) Grundierungsschicht
(c) Armierungsschicht
(d) Versiegelungsschicht

14. Verbundsystem gemäß einem der Ansprüche 1 bis 11, wobei es den folgenden Schichtenaufbau aufweist:
(a) mineralischer Untergrund
(b) Grundierungsschicht umfassend PMMA und/oder PMMA-Copolymer
(c) Armierungsschicht umfassend
- PMMA und/oder PMMA-Copolymer
- ein Gewebe, vorzugsweise ein Glasfasergewebe, als Armierung
- ggf. granuläres Material
(d) Versiegelungsschicht umfassend PMMA oder PMMA-Copolymer.

15. Verbundsystem gemäß einem der vorherigen Ansprüche, wobei die jeweiligen Schichten Armierungsschicht, optionale Grundierungsschicht und optionale Versiegelungsschicht durch Aushärten einer Beschichtungsmasse gebildet worden sind.

## Claims

1. A composite system comprising a mineral substrate and a layer comprising a fabric and at least one polymer (reinforcement layer), wherein the fabric has a tensile strength in warp and weft of at least 2500 N/5 cm respectively, wherein the tensile strength corresponds to the force at which a filamentary specimen under tensile load breaks when elongated under increasing force and the polymer is an acrylate resin and the proportion of the polymer and/or the copolymer to the cured coating medium is at least 30 wt-%, at least 50 wt-%, at least 80 wt-% or at least 90 wt-%, in relation to the respective coating medium.

2. A composite system according to Claim 1, wherein said polymer is a polymethyl methacrylate resin.

3. A composite system according to Claim 1 or 2, wherein said mesh fabric has a weft tensile strength of at least 3000 N/5 cm, preferably 3500 N/5 cm and/or a warp tensile strength of at least 2750 N/5 cm, preferably 3000 N/5 cm.

4. A composite system according to Claims 1 to 3, wherein said fabric is woven at least partially in leno weave.

5. A composite system according to one of Claims 1 to 4, wherein said fabric comprises glass fibres, carbon fibres, plastic fibres, metal fibres, aramid fibres or mineral fibres, or mixtures thereof.

6. A composite system according to Claim 4, wherein said glass fibres have a diameter of between 5 and 25 µm.

7. A composite system according to any one of the preceding claims, wherein said fabric is provided with a finish to enhance the slip resistance, wherein the finish comprises roughening, coating or impregnating with chemicals.

8. A composite system according to Claim 7, wherein said finish comprises impregnating the fabric with an elastomer, preferably selected from the group consisting of latex, styrenebutadiene rubber, natural rubber (NR), polyisoprene rubber (IR), acrylonitrile-butadiene rubber (NBR) and poly(-isobutylene-isoprene) rubber (IIR).

9. A composite system according to one of the preceding claims, wherein said fabric has an areal weight of 300 to 360 g/m², preferably of 315 to 355 g/m² and particularly preferably of 325 to 345 g/m².

10. A composite system according to one of the preceding claims, wherein said composite system additionally comprises a primer layer comprising at least one polymer.

11. A composite system according to one of the preceding claims, wherein said composite system additionally comprises a sealing layer comprising at least one polymer.

12. A composite system according to one of the preceding claims, wherein said composite system has the following layered structure:
(a) mineral substrate
(b) primer layer
(c) reinforcement layer.

13. A composite system according to one of Claims 1 to 11, wherein said composite system has the following layered structure:
(a) mineral substrate
(b) primer layer
(c) reinforcement layer
(d) sealing layer.

14. A composite system according to one of Claims 1 to 11, wherein said composite system has the following layered structure:
(a) mineral substrate
(b) primer layer comprising PMMA and/or PMMA copolymer
(c) reinforcement layer comprising
- PMMA and/or PMMA copolymer
- a fabric, preferably a glass fibre fabric, as reinforcement
- granular material, where required
(d) sealing layer comprising PMMA or PMMA copolymer.

15. A composite system according to one of the preceding claims, wherein said respective layers reinforcement layer, optional primer layer and optional sealing layer have been formed by a cured coating medium.

## Revendications

1. Système composite comprenant un support minéral et une couche qui comprend un tissu et au moins un polymère (couche d'armature), le tissu présentant une résistance à la traction pour la trame et la chaîne d'au moins 2500 N/5 cm respectivement, la résistance à la traction correspondant à la force à laquelle un échantillon filiforme tendu se déchire sous l'effet d'un allongement avec une force qui augmente constamment, et le polymère étant une résine d'acrylate et la proportion du polymère et/ou du copolymère dans la masse de revêtement durcie étant d'au moins 30 % en poids, au moins 50 % en poids, au moins 80 % en poids ou au moins 90 % en poids, par rapport à la masse de revêtement respective.

2. Système composite selon la revendication 1, dans lequel le polymère est une résine de polyméthacrylate de méthyle.

3. Système composite selon la revendication 1 ou 2, dans lequel le tissu à mailles présente une résistance à la traction de trame d'au moins 3000 N/5 cm, de préférence de 3500 N/5 cm et/ou une résistance à la traction de chaîne d'au moins 2750 N/5 cm, de préférence de 3000 N/5 cm.

4. Système composite selon les revendications 1 à 3, dans lequel le tissu est au moins partiellement tissé en gaze anglaise.

5. Système composite selon l'une quelconque des revendications 1 à 4, dans lequel le tissu est constitué de fibres de verre, de fibres de carbone, de fibres plastiques, de fibres métalliques, de fibres d'aramide ou de fibres minérales, ou de mélanges de celles-ci.

6. Système composite selon la revendication 5, dans lequel les fibres de verre présentent un diamètre compris entre 5 et 25 µm.

7. Système composite selon l'une quelconque des revendications précédentes, dans lequel le tissu est pourvu d'un apprêt pour augmenter la résistance au glissement, ledit apprêt comprenant le grainage, l'enduction ou l'imprégnation avec des produits chimiques.

8. Système composite selon la revendication 7, dans lequel l'apprêt comprend une imprégnation du tissu avec un élastomère, de préférence choisi dans le groupe composé de latex, de caoutchouc styrène-butadiène, de caoutchouc naturel (NR), de caoutchouc polyisoprène (IR), de caoutchouc acrylonitrile-butadiène (NBR) et de caoutchouc poly(isobutylène-isoprène) (IIR).

9. Système composite selon l'une quelconque des revendications précédentes, dans lequel le tissu présente un grammage de 300 à 360 g/m², de préférence de 315 à 355 g/m² et plus préférablement de 325 à 345 g/m².

10. Système composite selon l'une quelconque des revendications précédentes, dans lequel il présente en outre une couche d'apprêt comprenant au moins un polymère.

11. Système composite selon l'une quelconque des revendications précédentes, dans lequel il présente en outre une couche de scellement comprenant au moins un polymère.

12. Système composite selon l'une quelconque des revendications précédentes, présentant la structure de couches suivante :
(a) support minéral
(b) couche d'apprêt
(c) couche d'armature.

13. Système composite selon l'une quelconque des revendications 1 à 11, présentant la structure de couches suivante :
(a) support minéral
(b) couche d'apprêt
(c) couche d'armature
(d) couche de scellement.

14. Système composite selon l'une quelconque des revendications 1 à 11, présentant la structure de couches suivante :
(a) support minéral
(b) couche d'apprêt comprenant du PMMA et/ou un copolymère de PMMA
(c) couche d'armature comprenant
- du PMMA et/ou un copolymère PMMA
- un tissu, de préférence un tissu de fibres de verre, comme armature
- le cas échéant, du matériel granulaire
(d) couche de scellement comprenant du PMMA ou un copolymère de PMMA.

15. Système composite selon l'une quelconque des revendications précédentes, dans lequel les couches respectives de couche d'armature, de couche d'apprêt optionnelle et de couche de scellement optionnelle ont été formées par durcissement d'une masse de revêtement.
